# EUROPÄISCHE PATENTSCHRIFT

(11) **EP 3 399 154 B1**
(45) Veröffentlichungstag und Bekanntmachung des Hinweises auf die Patenterteilung: **22.07.2020**
(21) Anmeldenummer: 18167723.8
(22) Anmeldetag: 17.04.2018
(51) Int. Cl.: F01D 11/00, F16J 15/34, F01D 11/04, F01D 25/00

(54) **DICHTUNGSSYSTEM, STRÖMUNGSMASCHINE MIT EINEM DICHTUNGSSYSTEM UND VERFAHREN ZUM REINIGEN DESSELBEN**
SEALING SYSTEM, TURBOMACHINE COMPRISING A SEALING SYSTEM AND METHOD OF CLEANING THE SAME
SYSTÈME D'ÉTANCHÉITÉ, TURBOMACHINE POURVUE D'UN SYSTÈME D'ÉTANCHÉITÉ ET PROCÉDÉ DE NETTOYAGE DUDIT SYSTÈME D'ÉTANCHÉITÉ

(30) Priorität: 05.05.2017 DE 102017109663
(43) Veröffentlichungstag der Anmeldung: 07.11.2018
(73) Patentinhaber: MAN Energy Solutions SE, 86153 Augsburg (DE)
(72) Erfinder: Suter, Roger, 8052 Zürich (CH); Fischer, Simon, 5072 Oeschgen (CH); Betschart, Michael, 6354 Vitznau (CH); Rosenberger, Marcel, 8143 Stallikon (CH)

(56) Entgegenhaltungen:
- WO-A1-2016/207761
- DE-A1- 3 012 711
- DE-A1-102015 013 659
- US-A1- 2008 093 806

## Beschreibung

Die Erfindung betrifft eine Strömungsmaschine mit einem Dichtungssystem gemäß dem Oberbergriff des Anspruchs 1. Des Weiteren betrifft die Erfindung ein Verfahren zum Reinigen des Dichtungssystems.

In Strömungsmaschinen, wie zum Beispiel in Turbokompressoren, kommen zur Abdichtung eines Rotors der Strömungsmaschine gegenüber einem Stator der Strömungsmaschine mehrheitlich Trockengasdichtungen zum Einsatz.

So ist aus der EP 2 977 563 A1 eine Trockendichtung einer Strömungsmaschine bekannt. Dichtungsgas kann einem abzudichtenden Dichtspalt über eine Bohrung im Stator sowie über einen Gasraum, der von der Trockengasdichtung bereitgestellt wird, zugeführt werden.

Bei Trockengasdichtungen besteht das Problem, dass dieselben durch Verschmutzungen ausfallen können. Solche Verschmutzungen werden dabei zum Beispiel über im Dichtungsgas und/oder Prozessgas enthaltene Fremdstoffe eingetragen. Die Verschmutzungen können sich dabei durch auskondensierende Gase, auskondensierende Feststoffe oder andere Fremdpartikel ausbilden, welche sich im Bereich der Trockengasdichtung ablagern können und zu einem Versagen der Trockengasdichtung führen können. Dies ist von Nachteil.

Die DE 10 2015 013 659 A1 offenbart eine Strömungsmaschine gemäß dem Oberbergriff des Anspruchs 1.

DE 30 12 711 A1, US 2008/093804 A1 und WO 2016/207781 A1 offenbaren weiteren Stand der Technik.

Der hier vorliegenden Erfindung liegt die Aufgabe zugrunde, eine Strömungsmaschine mit einem Dichtungssystem bereitzustellen, bei dem die Gefahr eines verschmutzungsbedingten Ausfalls reduziert ist. Weiterhin liegt der Erfindung die Aufgabe zugrunde, ein Verfahren zum Reinigen des Dichtungssystems bereitzustellen.

Diese Aufgabe wird durch eine Strömungsmaschine nach Anspruch 1 gelöst.

Über die Reinigungseinrichtung ist Waschmittel in Richtung auf das Federelement zur Reinigung desselben und/oder in Richtung auf den Dichtspalt zur Reinigung desselben führbar. Über die Reinigungseinrichtung kann Waschmittel zur Reinigung der Trockengasdichtung bereitgestellt werden, nämlich zur Reinigung des Federelements bzw. eines das Federelement aufnehmenden Federraum s und/oder zur Reinigung des Dichtspalts der Trockengasdichtung. Durch die Reinigung besteht eine geringere Gefahr, dass das Dichtungssystem verschmutzungsbedingt ausfällt.

In den Stator und in eine erste zusammen mit dem Stator feststehende, statorseitige Komponente mindestens ein Dichtgas-Zuführkanal und mindestens ein Dichtgas-Abführkanal eingebracht, um über den Dichtgas-Zuführkanal Dichtgas in Richtung auf den Dichtspalt der Trockengasdichtung und über den Dichtgas-Abführkanal Dichtgas weg vom Dichtspalt der Trockengasdichtung zu führen. Der Dichtgas-Zuführkanal und der Dichtgas-Abführkanal sind in Axialrichtung beabstandet. Ein Waschmittel-Zuführkanal ist in Axialrichtung zwischen dem Dichtgas-Zuführkanal und dem Dichtgas-Abführkanal ausgebildet.

Vorzugsweise sind in den Stator ein radial äußerer Abschnitt des Dichtgas-Zuführkanals und in die angrenzende statorseitigen Komponente mehrere radial innere Abschnitte des Dichtgas-Zuführkanals eingebracht, wobei vorzugsweise zwischen dem Stator und der angrenzenden statorseitigen Komponente ein diese Abschnitte verbindender erster Ringspalt ausgebildet ist. Hiermit kann das Dichtgas besonders vorteilhaft innerhalb des Dichtungssystems geführt werden.

Nach einer vorteilhaften Weiterbildung ist in den Stator und in eine zweite zusammen mit dem Stator feststehende, statorseitige Komponente mindestens ein Waschmittel-Zuführkanal und mindestens ein Waschmittel-Abführkanal eingebracht, um über den Waschmittel-Zuführkanal Waschmittel in Richtung auf das Federelement und über den Waschmittel-Abführkanal Waschmittel weg vom das Federelement zu führen. Vorzugsweise sind in den Stator ein radial äußerer Abschnitt des Waschmittel-Zuführkanals und in die angrenzende statorseitigen Komponente ein radial innerer Abschnitt des Waschmittel-Zuführkanals eingebracht. Vorzugsweise ist Waschmittel über den Waschmittel-Zuführkanal auch in Richtung auf den Dichtspalt und über den Dichtgas-Abführkanal weg vom Dichtspalt führbar. Hierdurch kann das Waschmittel besonders vorteilhaft innerhalb des Dichtungssystems geführt werden.

Nach einer vorteilhaften Weiterbildung sind der Dichtgas-Zuführkanal und der Dichtgas-Abführkanal in Axialrichtung vorzugsweise an derselben Umfangsposition ausgebildet. Der Waschmittel-Zuführkanal und der Waschmittel-Abführkanal sind in Umfangsrichtung beabstandet und vorzugsweise an derselben Axialposition ausgebildet. Der Waschmittel-Zuführkanal ist vorzugsweise an derselben Umfangsposition ausgebildet. Diese Weiterbildung erlaubt eine besonders vorteilhafte, funktional optimale sowie bauraumsparende Integration der Zuführkanäle für Dichtgas und Waschmittel in das Dichtungssystem.

Nach einer vorteilhaften Weiterbildung weist das Dichtungssystem der Strömungsmaschine ein Waschmitteldosiersystem auf, über welches das Waschmittel dem Waschmittel-Zuführkanal mit einem definierten Waschmitteldruck zuführbar ist. Durch Bereitstellung des definierten Waschmitteldrucks kann ein optimales Reinigungsergebnis der Trockengasdichtung gewährleistet werden.

Vorzugsweise weist das Dichtungssystem der Strömungsmaschine, insbesondere das Waschmitteldosiersystem, eine Heizeinrichtung zum Erhitzen des Waschmittels auf. Durch das Erhitzen des Waschmittels kann das Dichtungssystem erhitzt werden, was insbesondere dann von Vorteil ist, wenn das Reinigen des Dichtungssystems während des Stillstands der Strömungsmaschine erfolgt.

Das Verfahren zum Reinigen des Dichtungssystems ist in Anspruch 13 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

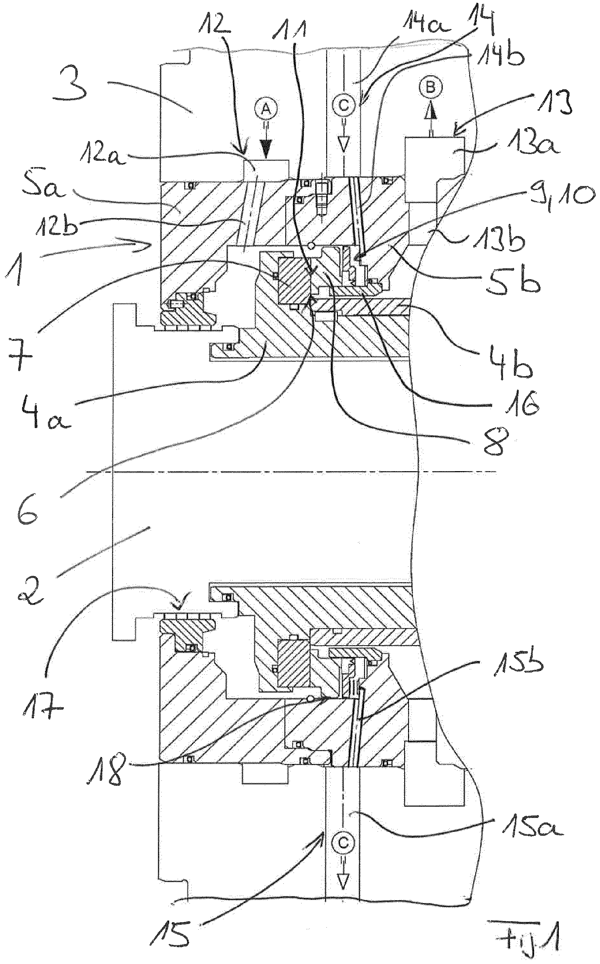

- Fig. 1:: einen schematisieren Axialschnitt durch eine erfindungsgemäße Strömungsmaschine im Bereich eines Dichtungssystems.

Die Erfindung betrifft eine Strömungsmaschine, insbesondere einen Turbokompressors welcher der Verdichtung eines Prozessgases dient, mit einem Dichtungssystem.

Fig. 1 zeigt einen Ausschnitt aus einer Strömungsmaschine im Bereich eines Dichtungssystems 1, welches der Abdichtung eines Rotors 2 der Strömungsmaschine gegenüber einem Stator 3 der Strömungsmaschine dient. Zwischen dem Rotor 2 und dem Stator 3 ist das Dichtungssystem 1 positioniert. Das Dichtungssystem 1 verfügt über mindestens eine mit dem Rotor 2 rotierende, rotorseitige Komponente 4a, 4b sowie über mindestens eine zusammen mit dem Stator 3 feststehende, statorseitige Komponente 5a, 5b.

Das Dichtungssystem 1 verfügt über mindestens eine Trockengasdichtung 6, wobei die Trockengasdichtung 6 eine rotorseitige Dichtungskomponente 7 und eine statorseitige Dichtungskomponente 8 aufweist, die in Axialrichtung über ein Federelement 9, das in einem statorseitigen Federraum 10 aufgenommen ist und das gegen das statorseitige Dichtungselement 8 drückt, zusammengedrückt sind. Zwischen diesen zusammengedrückten Dichtungskomponenten 7, 8 der Trockengasdichtung 6 ist ein Dichtspalt 11 ausgebildet. Die rotorseitige Dichtungskomponente 7 der Trockengasdichtung 6 ist an der rotorseitigen Komponente 4a des Dichtungssystems 1 befestigt. Ein statorseitiges Führungselement 16 führt das statorseitige Dichtungselement 8. Zwischen der statorseitigen Komponente 5a ist im gezeigten Ausführungsbeispiel eine optionale Labyrinthdichtung 17 ausgebildet.

In den Stator 3 und in mindestens eine zusammen mit dem Stator 3 feststehende statorseitige Komponente ist mindestens ein Dichtgas-Zuführkanal 12 sowie mindestens ein Dichtgas-Abführkanal 13 eingebracht.

Im in Fig. 1 gezeigten, bevorzugten Ausführungsbeispiel ist der Abgaszuführkanal 12 durch mehrere Abschnitte ausgebildet, nämlich durch einen radial äußeren Abschnitt 12a, der in den Stator 3 eingebracht ist, sowie in mehrere radial innere Abschnitte 12b, die in die angrenzende, statorseitige Komponente 5a eingebracht sind, wobei vorzugsweise zwischen dem Stator 3 und dieser angrenzenden statorseitigen Komponente 5a ein Ringspalt ausgebildet ist, über welchen der Abschnitt 12a mit den Abschnitten 12b gekoppelt ist. Auf analoge Art und Weise ist der Dichtgas-Abführkanal 13 ausgebildet, wobei der Dichtgas-Abführkanal 13 einen radial äußeren Abschnitt 13a aufweist, der in den Stator 3 eingebracht ist, sowie mehrere radial innere Abschnitte 13b, die in die angrenzende statorseitige Komponente 5b eingebracht sind. Zwischen dem Stator 3 und der angrenzenden statorseitigen Komponente 5b ist vorzugsweise ein Ringspalt ausgebildet, über den die radial inneren Abschnitte 13b des Dichtgas-Abströmkanals 13 mit dem radial äußeren Abschnitt 13a desselben verbunden sind.

Über den Dichtgas-Zuführkanal 12 ist das Dichtgas in Richtung auf den abzudichtenden Dichtspalt 11 führbar, wobei das Dichtgas stromabwärts dieses Dichtspalts 11 vom Dichtspalt 11 über den Dichtgas-Abführkanal 13 abführbar ist.

Der Strömungspfeil A visualisiert die Zuführung des Dichtgases (siehe schwarz ausgefüllte Pfeilspitze) über den Dichtgas-Zuführkanal 12.

Das Dichtungssystem 1 der Strömungsmaschine verfügt über eine Reinigungseinrichtung, über die vorzugsweise flüssiges Waschmittel in Richtung auf das Federelement 9 bzw. den das Federelement 9 aufnehmenden Federraum 10 und/oder in Richtung auf den Dichtspalt 11 führbar ist, um im Bereich des Federelements 9 und/oder des Dichtspalts 11 das Dichtungssystem 11 zu reinigen und so Verschmutzungen aus demselben auszutragen, sodass die Gefahr des verschmutzungsbedingten Ausfalls der Trockengasdichtung 6 des Dichtungssystems 1 reduziert ist.

Diese Reinigungseinrichtung umfasst einen Waschmittel-Zuführkanal 14 und einen Waschmittel-Abführkanal 15. In den Stator 3 sowie in eine sich an den Stator 3 angrenzende, zusammen mit dem Stator 3 feststehende, statorseitige Komponente 5b ist der Waschmittel-Zuführkanal 14 sowie vorzugsweise auch der Waschmittel-Abführkanal 15 eingebracht. Über den Waschmittel-Zuführkanal 14 kann Waschmittel in Richtung auf das Federelement 9 bzw. den Federraum 10 geführt werden, und vorzugsweise auch ausgehend vom Federraum 10 über einen Spalt 18 zwischen der statorseitige Dichtungskomponente 8 und der statorseitige Komponente 5b dem Dichtspalt 11 zugeführt werden, wobei flüssiges Waschmittel, welches den Federraum 10 reinigt, über den Waschmittel-Abführkanal 15 vom Federraum 10 abgeführt wird, und wobei Waschmittel, welches in den Bereich des Dichtspalts 11 gelangt, über den Dichtgas-Abführkanal 13 abgeführt werden kann. Das Waschmittel verteilt sich im Federraum 10 über den gesamten Umfang desselben.

Der Strömungspfeil C verdeutlicht die Führung des Waschmittels (siehe weiß ausgefüllte Pfeilspitze), welches ausgehend vom Waschmittel-Zuführkanal 14 über den Federraum 10 in Richtung auf den Waschmittel-Abführkanal 15 strömt.

Ein Strömungspfeil B visualisiert die Strömung des Waschmittels und des Dichtgases (siehe schwarz/weiß ausgefüllte Pfeilspitze) ausgehend vom Dichtspalt 11 in den Bereich des Dichtgas-Abströmkanals 13.

Der Dichtgas-Zuführkanal 12 ist vom Dichtgas-Abführkanal 13 axial beabstandet, vorzugsweise sind dieselben jedoch an der gleichen Umfangsposition ausgebildet. Der Waschmittel-Zuführkanal 14 und der Waschmittel-Abführkanal 15 sind in Umfangsrichtung gesehen zueinander versetzt und in Axialrichtung vorzugsweise an derselben Axialposition ausgebildet. Fig. 1 zeigt, dass der Waschmittel-Zuführkanal 14 dabei in Axialrichtung gesehen zwischen dem Dichtgas-Zuführkanal 12 und dem Dichtgas-Abführkanal 13 ausgebildet ist, und vorzugsweise zusammen mit denselben an derselben Umfangsposition ausgebildet ist.

Der Waschmittel-Zuführkanal 14 ist von einem radial äußeren Abschnitt 14a, der in den Stator 3 eingebracht ist, sowie von mindestens einem radial inneren Abschnitten 14b ausgebildet, die in die statorseitige Komponente 5b eingebracht sind. Ebenso stellt diese statorseitige Komponente 5b den Waschmittel-Abführkanal 15 bereit, nämlich mindestens einen radial inneren Abschnitte 15b desselben, wobei ein radial äußerer Abschnitt 15a des Waschmittel-Abführkanals 15 wiederum vom Stator 3 bereitgestellt ist.

Mit der oben beschriebenen Ausführung des Dichtungssystems 1 kann sowohl das Dichtgas als auch das flüssige Waschmittel optimal geführt werden, und zwar unter optimaler Bauraumausnutzung.

Das Dichtungssystem 1 verfügt weiterhin über ein nicht gezeigtes WaschmittelDosiersystem, über welches das Waschmittel dem Waschmittel-Zuführkanal 14 bereitgestellt werden kann. Hierbei ist es möglich, dass das Waschmitteldosiersystem einen Waschmitteltank umfasst, in dem Waschmittel bereitgestellt wird, wobei an den Waschmitteltank ein separater Druckbehälter angeschlossen werden kann, der das Waschmittel im Waschmittelvorratsbehälter unter Druck setzt und mit einem definierten Waschmitteldruck der Waschmittel-Zuführleitung 14 bereitstellt.

Ebenso ist es möglich, die Funktion von Waschmittelvorratsbehälter und Druckluftbehälter in einem Behälter zu integrieren und im Druckmittelbehälter unter Druck stehendes Waschmittel bereitzustellen und dasselbe dann ausgehend vom Druckmittelbehälter mit einem definierten Waschmitteldruck der Waschmittel-Zuführleitung 14 zuzuführen.

Auch kann Waschmittel ausgehend vom Waschmittelvorratsbehälter der Waschmittel-Zuführleitung 14 über eine Pumpe bereitgestellt werden, deren Förderdruck dann den Waschmitteldruck bestimmt.

Vorzugsweise umfasst das Dichtungssystem, nämlich das nicht gezeigte Waschmitteldosiersystem, eine nicht gezeigte Heizeinrichtung, um das Waschmittel vor der Zuführung desselben in Richtung auf das Dichtungssystem 1 zu erhitzen.

Eine Strömungsmaschine, die das oben beschriebene Dichtungssystem 1 umfasst, wird vorzugsweise im Stillstand der Strömungsmaschine mithilfe des Waschmittels gereinigt, sodass dann das Waschmittel ausschließlich im Stillstand der Strömungsmaschine dem Dichtungssystem 1, nämlich der Trockengasdichtung 6, zugeführt wird. In diesem Fall ist das Erhitzen des Waschmittels von Vorteil, um bei stillstehender Strömungsmaschine das Dichtungssystem 1, nämlich der Trockengasdichtung 6, zu erhitzen und eine Prozessgaskondensation während des Stillstands, also während der Reinigung, zu verhindern.

Es ist jedoch auch möglich, das Dichtungssystem 1 bei laufender Strömungsmaschine zu reinigen, wobei dann bei laufender Strömungsmaschine gleichzeitig Dichtgas und Waschmittel in Richtung auf das Dichtungssystem 1 geführt wird.

Das Druckniveau des Waschmittels ist selbstverständlich darauf ausgelegt, ob das Reinigen des Dichtungssystems 1 bei stillstehender oder laufender Strömungsmaschine durchgeführt wird.

### Bezugszeichenliste

- 1: Dichtungssystem
- 2: Rotor
- 3: Stator
- 4a: rotorseitige Komponente
- 4b: rotorseitige Komponente
- 5a: statorseitige Komponente
- 5b: statorseitige Komponente
- 6: Trockengasdichtung
- 7: rotorseitige Dichtungskomponente
- 8: statorseitige Dichtungskomponente
- 9: Feder
- 10: Federraum
- 11: Dichtspalt
- 12: Dichtgas-Zuführkanal
- 12a: Abschnitt
- 12b: Abschnitt
- 13: Dichtgas-Abführkanal
- 13a: Abschnitt
- 13b: Abschnitt
- 14: Waschmittel-Zuführkanal
- 14a: Abschnitt
- 14b: Abschnitt
- 15: Waschmittel-Abführkanal
- 15a: Abschnitt
- 15b: Abschnitt
- 16: Führungselement
- 17: Labyrinthdichtung
- 18: Spalt

## Patentansprüche

1. Strömungsmaschine mit einem Dichtungssystem (1) zur Abdichtung eines Rotors (2) der Strömungsmaschine gegenüber einem Stator (3) der Strömungsmaschine,
mit mindestens einer zusammen mit dem Rotor (2) rotierenden, rotorseitigen Komponente (4a, 4b),
mit mindestens einer mit zusammen mit dem Stator (3) feststehenden, statorseitigen Komponente (5a, 5b),
mit mindestens einer Trockengasdichtung (6), die eine rotorseitige Dichtungskomponente (7) und eine statorseitige Dichtungskomponente (8) aufweist, die über ein Federelement (9) unter Ausbildung eines Dichtspalts (11) zusammengedrückt sind,
mit einer Reinigungseinrichtung,
wobei
in den Stator (3) und in zusammen mit dem Stator (3) feststehende, statorseitige Komponenten (5a, 5b) ein Dichtgas-Zuführkanal (12) und ein Dichtgas-Abführkanal (13) eingebracht ist, um über den Dichtgas-Zuführkanal (12) Dichtgas in Richtung auf den Dichtspalt (11) und über den Dichtgas-Abführkanal (13) Dichtgas weg vom Dichtspalt (11) zu führen, wobei der Dichtgas-Zuführkanal (12) und der Dichtgas-Abführkanal (13) in Axialrichtung beabstandet sind,
**dadurch gekennzeichnet, dass** über die Reinigungseinrichtung Waschmittel in Richtung auf das Federelement (9) zur Reinigung desselben und/oder in Richtung auf den Dichtspalt (11) zur Reinigung desselben führbar ist,
wobei ein Waschmittel-Zuführkanal (14) in Axialrichtung zwischen dem Dichtgas-Zuführkanal (12) und dem Dichtgas-Abführkanal (13) ausgebildet ist.

2. Strömungsmaschine mit einem Dichtungssystem (1) nach Anspruch 1, **dadurch gekennzeichnet, dass** in den Stator (3) ein radial äußerer Abschnitt (12a) des Dichtgas-Zuführkanals (12) und in die angrenzende statorseitigen Komponente (5a) mehrere radial innere Abschnitte (12b) des Dichtgas-Zuführkanals (12) eingebracht sind, wobei vorzugsweise zwischen dem Stator (3) und der angrenzenden statorseitigen Komponente (5a) ein diese Abschnitte (12a, 12b) verbindender erster Ringspalt ausgebildet ist.

3. Strömungsmaschine mit einem Dichtungssystem (1) nach Anspruch 1 oder 2, **dadurch gekennzeichnet, dass** in den Stator (3) ein radial äußerer Abschnitt (13a) des Dichtgas-Abführkanals (13) und in die angrenzende statorseitigen Komponente (5b) mehrere radial innere Abschnitte (13b) des Dichtgas-Abführkanals (12) eingebracht sind, wobei vorzugsweise zwischen dem Stator (3) und der angrenzenden statorseitigen Komponente (5b) ein diese Abschnitte (13a, 13b) verbindender Ringspalt ausgebildet ist.

4. Strömungsmaschine mit einem Dichtungssystem (1) nach einem der Ansprüche 1 bis 3, **dadurch gekennzeichnet, dass** in den Stator (3) und in eine zusammen mit dem Stator (3) feststehende statorseitige Komponente (5b) der Waschmittel-Zuführkanal (14) und ein Waschmittel-Abführkanal (15) eingebracht ist, um über den Waschmittel-Zuführkanal (14) Waschmittel in Richtung auf das Federelement (9) und über den Waschmittel-Abführkanal (15) Waschmittel weg vom das Federelement (9) zu führen.

5. Strömungsmaschine mit einem Dichtungssystem (1) nach Anspruch 4, **dadurch gekennzeichnet, dass** in den Stator (3) ein radial äußerer Abschnitt (14a, 15a) des Waschmittel-Zuführkanals (14) und des Waschmittel-Abführkanals (15) eingebracht ist, und dass in die angrenzende statorseitigen Komponente (5b) ein radial innerer Abschnitt (14a) des Waschmittel-Zuführkanals (14) und ein radial innerer Abschnitte (15a) des Waschmittel-Abführkanals (15) eingebracht ist.

6. Strömungsmaschine mit einem Dichtungssystem (1) nach Anspruch 4 oder 6, **dadurch gekennzeichnet, dass** Waschmittel über den Waschmittel-Zuführkanal (14) in Richtung auf den Dichtspalt (11) und über den Dichtgas-Abführkanal (13) weg vom Dichtspalt (11) führbar ist.

7. Strömungsmaschine mit einem Dichtungssystem (1) nach einem der Ansprüche 1 bis 6, **dadurch gekennzeichnet, dass** der Dichtgas-Zuführkanal (12) und der Dichtgas-Abführkanal (13) an derselben Umfangsposition ausgebildet sind.

8. Strömungsmaschine mit einem Dichtungssystem (1) nach einem der Ansprüche 4 7 8, **dadurch gekennzeichnet, dass** der Waschmittel Zuführkanal (14) und der Waschmittel-Abführkanal (15) in Umfangsrichtung beabstandet und vorzugsweise an derselben Axialposition ausgebildet sind.

9. Strömungsmaschine mit einem Dichtungssystem (1) nach einem der Ansprüche 4 bis 8, **dadurch gekennzeichnet, dass** der Waschmittel-Zuführkanal (14) an derselben Umfangsposition wie der Dichtgas-Zuführkanal (12) und der Dichtgas-Abführkanal (13) ausgebildet ist.

10. Strömungsmaschine mit einem Dichtungssystem (1) nach einem der Ansprüche 4 bis 9, **dadurch gekennzeichnet, dass** das Waschmittel dem Waschmittel-Zuführkanal (14) ausgehend von einem Waschmitteldosiersystem mit einem definierten Waschmitteldruck zuführbar ist.

11. Strömungsmaschine mit einem Dichtungssystem (1) nach einem der Ansprüche 1 bis 10, **gekennzeichnet durch** eine Heizeinrichtung zum Erhitzen des zur Reinigung der Trockengasdichtung genutzten Waschmittels.

12. Turbokompressor zur Verdichtung eines Prozessgases, mit einem Stator und einem Rotor, und mit einem Dichtungssystem (1), **dadurch gekennzeichnet, dass** das Dichtungssystem (1) nach einem der Ansprüche 1 bis 11 ausgebildet ist.

13. Verfahren zum Reinigen eines Turbokompressors nach Anspruch 12, wobei die Trockengasdichtung im Stillstand der Strömungsmaschine gereinigt wird.

14. Verfahren nach Anspruch 13, **dadurch gekennzeichnet, dass** das Waschmittel vor der Zuführung in Richtung auf den Dichtspalt erhitzt wird.

## Claims

1. A turbomachine having a sealing system (1) for sealing a rotor (2) of the turbomachine relative to a stator (3) of the turbomachine,
having at least one rotor-side component (4a, 4b) rotating together with the rotor (2),
having at least one stator-side component (5a, 5b) fixed together with the stator (3),
having at least one dry gas seal (6), which comprises a rotor-side sealing component (7) and a stator-side sealing component (8), which by way of a spring element (9) are compressed forming a sealing gap (11),
having a cleaning device,
wherein
into the stator (3) and into stator-side components (5a, 5b) fixed together with the stator (3), a sealing gas feeding passage (12) and a sealing gas discharge passage (13) are introduced, in order to conduct sealing gas, via the sealing gas feeding passage (12), in the direction of the sealing gap (11) and, via the sealing gas discharge passage (13), sealing gas away from the sealing gap (11), wherein the sealing gas feeding passage (12) and the sealing gas discharge passage (13) are spaced apart in the axial direction,
**characterized in that**
by way of the cleaning device, washing agent can be conducted in the direction of the spring element (9) for the cleaning of the same and/or in the direction of the sealing gap (11) for the cleaning of the same,
wherein a washing agent feeding passage (14) is formed in the axial direction between the sealing gas feeding passage (12) and the sealing gas discharge passage (13).

2. The turbomachine having a sealing system (1) according to Claim 1, **characterized in that** into the stator (3) a radially outer portion (12a) of the sealing gas feeding passage (12) and into the adjoining stator-side component (5a), multiple radially inner portions (12b) of the sealing gas feeding passage (12) are introduced, wherein preferentially between the stator (3) and the adjoining stator-side component (5a), a first annular gap connecting these portions (12a, 12b) is formed.

3. The turbomachine having a sealing system (1) according to Claim 1 or 2, **characterized in that** into the stator (3), a radially outer portion (13a) of the sealing gas discharge passage (13) and into the adjoining stator-side component (5b) multiple radially inner portions (13b) of the sealing gas discharge passage (12) are introduced, wherein preferentially between the stator (3) and the adjoining stator-side component (5b) an annular gap connecting these portions (13a, 13b) is formed.

4. The turbomachine having a sealing system (1) according to any one of the Claims 1 to 3, **characterized in that** into the stator (3) and into a stator-side component (5b) that is fixed together with the stator (3) the washing agent feeding passage (14) and a washing agent discharge passage (15) are introduced, in order to conduct, via the washing agent feeding passage (14), washing agent in the direction of the spring element (9) and via the washing agent discharge passage (15), washing agent away from the spring element (9).

5. The turbomachine having a sealing system (1) according to Claim 4, **characterized in that** into the stator (3) a radially outer portion (14a, 15a) of the washing agent feeding passage (14) and of the washing agent discharge passage (15) is introduced, and **in that** into the adjoining stator-side component (5b) a radially inner portion (14a) of the washing agent feeding passage (14) and a radially inner portion (15a) of the washing agent discharge passage (15) is introduced.

6. The turbomachine having a sealing system (1) according to Claim 4 or 6, **characterized in that** washing agent can be conducted via the washing agent feeding passage (14) in the direction of the sealing gap (11) and via the sealing gas discharge passage (13), away from the sealing gap (11).

7. The turbomachine having a sealing system (1) according to any one of the Claims 1 to 6, **characterized in that** the sealing gas feeding passage (12) and the sealing gas discharge passage (13) are formed in the same circumferential position.

8. The turbomachine having a sealing system (1) according to any one of the Claims 4, 7, 8, **characterized in that** the washing agent feeding passage (14) and the washing agent discharge passage (15) are formed spaced apart in the circumferential direction and preferentially in the same axial position.

9. The turbomachine having a sealing system (1) according to any one of the Claims 4 to 8, **characterized in that** the washing agent feeding passage (14) is formed in the same circumferential position as the sealing gas feeding passage (12) and the sealing gas discharge passage (13).

10. The turbomachine having a sealing system (1) according to any one of the Claims 4 to 9, **characterized in that** the washing agent can be fed to the washing agent feeding passage (14) with a defined washing agent pressure emanating from a washing agent metering system.

11. The turbomachine having a sealing system (1) according to any one of the Claims 1 to 10, **characterized by** a heating device for heating the washing agent utilised for cleaning the dry gas seal.

12. A turbo compressor for compressing a process gas, having a stator and a rotor, and having a sealing system (1), **characterized in that** the sealing system (1) is formed according to any one of the Claims 1 to 11.

13. A method for cleaning a turbo compressor according to Claim 12, wherein the dry gas seal is cleaned with the turbomachine in the stationary state.

14. The method according to Claim 13, **characterized in that** the washing agent is heated prior to being fed in the direction of the sealing gap.

## Revendications

1. Turbomachine comportant un système d'étanchéité (1) pour sceller de manière étanche un rotor (2) de la turbomachine par rapport à un stator (3) de la turbomachine,
comportant au moins un composant côté rotor (4a, 4b) tournant avec le rotor (2),
comportant au moins un composant (5a,5b) côté stator fixé avec le stator (3),
comportant au moins un joint de gaz sec (6), qui a un composant d'étanchéité côté rotor (7) et un composant d'étanchéité côté stator (8), qui sont compressés par l'intermédiaire d'un élément à ressort (9) en réalisant un espace d'étanchéité (11), comportant un dispositif de nettoyage,
dans laquelle
un canal d'alimentation en gaz d'étanchéité (12) et un canal d'évacuation de gaz d'étanchéité (13) sont ménagés dans le stator (3) et dans les composants côté stator (5a, 5b) qui sont fixés conjointement au stator (3) afin de guider via le canal d'alimentation (12) du gaz d'étanchéité dans la direction de l'espace d'étanchéité (11) et évacuer le gaz d'étanchéité de l'espace d'étanchéité (11) via le canal d'évacuation de gaz (13), dans lequel le canal d'alimentation en gaz d'étanchéité (12) et le canal d'évacuation de gaz d'étanchéité (13) sont espacés dans la direction axiale,
**caractérisé en ce que**
par l'intermédiaire du dispositif de nettoyage, du détergent peut être guidé dans la direction de l'élément à ressort (9) pour le nettoyer et/ou dans la direction de l'espace d'étanchéité (11) pour le nettoyer,
dans lequel un canal d'alimentation en détergent (14) est réalisé dans la direction axiale entre le canal d'alimentation en gaz d'étanchéité (12) et le canal d'évacuation de gaz d'étanchéité (13).

2. Turbomachine comportant un système d'étanchéité (1) selon la revendication 1, **caractérisé en ce que** dans le stator (3) une partie radialement extérieure (12a) du canal d'alimentation en gaz d'étanchéité (12) et dans le composant adjacent du côté stator (5a), une pluralité de sections radialement internes (12b) du canal d'alimentation en gaz d'étanchéité (12) sont ménagées, dans laquelle de préférence un premier espace annulaire reliant ces sections (12a, 12b) est formé entre le stator (3) et le composant côté stator adjacent (5a).

3. Turbomachine comportant un système d'étanchéité (1) selon la revendication 1 ou 2, **caractérisé en ce que** dans le stator (3) une partie radialement extérieure (13a) du canal d'évacuation de gaz d'étanchéité (13) et dans le composant adjacent côté stator (5b) une pluralité de sections radialement internes (13b) du canal d'évacuation de gaz d'étanchéité (12) sont ménagées, dans lequel de préférence un espace annulaire reliant ces sections (13a, 13b) est formé entre le stator (3) et le composant adjacent côté stator (5b).

4. Turbomachine comportant un système d'étanchéité (1) selon une des revendications 1 à 3, **caractérisé en ce que** le canal d'alimentation en détergent (14) dans le stator (3) et dans un composant côté stator (5b) qui est fixé conjointement au stator (3) et un canal d'évacuation de détergent (15) est ménagé, afin de guider par l'intermédiaire du canal d'alimentation en détergent (14) du détergent en direction de l'élément à ressort (9) et d'évacuer le détergent de l'élément à ressort (9) par l'intermédiaire du canal d'évacuation (15) .

5. Turbomachine comportant un système d'étanchéité (1) selon la revendication 4, **caractérisé en ce qu'**une section radialement extérieure (14a, 15a) du canal d'alimentation en détergent (14) et du canal d'évacuation du détergent (15) est ménagée dans le stator (3), et que dans le composant adjacent côté stator (5b) une section radialement intérieure (14a) du canal d'alimentation en détergent (14) et une partie radialement intérieure (15a) du canal d'évacuation de détergent (15) sont ménagées.

6. Turbomachine comportant un système d'étanchéité (1) selon la revendication 4 ou 6, **caractérisé en ce que** du détergent peut être guidé via le canal d'alimentation en détergent (14) dans la direction de l'espace d'étanchéité (11) et peut être évacué de l'espace d'étanchéité (11) via le canal d'évacuation de gaz d'étanchéité (13).

7. Turbomachine comportant un système d'étanchéité (1) selon une des revendications 1 à 6, **caractérisé en ce que** le canal d'alimentation en gaz d'étanchéité (12) et le canal d'évacuation de gaz d'étanchéité (13) sont réalisés à la même position circonférentielle.

8. Turbomachine comportant un système d'étanchéité (1) selon une quelconque des revendications 4, 7, 8, **caractérisé en ce que** le canal d'alimentation en détergent (14) et le canal d'évacuation de détergent (15) sont espacés dans la direction circonférentielle et sont de préférence réalisés à la même position axiale.

9. Turbomachine comportant un système d'étanchéité (1) selon une des revendications 4 à 8, **caractérisé en ce que** le canal d'alimentation en détergent (14) est réalisé à la même position circonférentielle que le canal d'alimentation en gaz d'étanchéité (12) et le canal d'évacuation de gaz d'étanchéité (13).

10. Turbomachine comportant un système d'étanchéité (1) selon une des revendications 4 à 9, **caractérisé en ce que** le détergent peut être amené au canal d'alimentation en détergent (14) à partir d'un système de dosage de détergent avec une pression de détergent définie.

11. Turbomachine comportant un système d'étanchéité (1) selon une des revendications 1 à 10, **caractérisé par** un dispositif de chauffage pour chauffer le détergent utilisé pour nettoyer le joint de gaz sec.

12. Turbocompresseur pour compresser un gaz de procédé, comportant un stator et un rotor, et comportant un système d'étanchéité (1), **caractérisé en ce que** le système d'étanchéité (1) est conçu selon une des revendications 1 à 11.

13. Procédé de nettoyage d'un turbocompresseur selon la revendication 12, dans lequel le joint à gaz sec est nettoyé lorsque la turbomachine est à l'arrêt.

14. Procédé selon la revendication 13, **caractérisé en ce que** le détergent est chauffé dans la direction de l'espace d'étanchéité avant d'être alimenté.
